# EUROPEAN PATENT APPLICATION

(11) **EP 1 662 437 A1**
(43) Date of publication of application: **31.05.2006**
(21) Application number: 04772812.6
(22) Date of filing: 30.08.2004
(51) Int. Cl.: G06T 1/00

(54) **ELECTRONIC DEVICE AND METHOD FOR OUTPUTTING RESPONSE INFORMATION IN ELECTRONIC DEVICE**

(30) Priority: 01.09.2003 JP 2003308617
(71) Applicant: MATSUSHITA ELECTRIC INDUSTRIAL CO., LTD., Kadoma-shi, Osaka 571-8501 (JP)
(72) Inventor: YAMADA, Shin, / (JP); MORITA, Kaoru, / (JP); NISHIMURA, Makoto, / (JP); ONISHI, Yasuka, / (JP); TASHIRO, Takayuki, / (JP)
(74) Representative: Grünecker, Kinkeldey, Stockmair & Schwanhäusser Anwaltssozietät
(86) International application number: PCT/JP2004/012863
(87) International publication number: WO 2005/022461

(57) **Abstract**

An object of the present invention is to provide an electronic apparatus which can imitate a virtual character and in which others than a user can have communication with the virtual character so that the user can enjoy using the electronic apparatus together with the others.

Input image information input through an image pickup portion (5) is compared with user's face image data or face feature data stored in a registered dictionary in a non-volatile memory (4), so as to generate response information. The registered dictionary includes partial region image data or feature data of each face part. The response information is generated based on similarity between image information of each face part extracted from the input image information and the registered dictionary. The response information is output to a display portion (6) as information imitating a behavior of the virtual character. Input of image information, comparison with the registered dictionary, generation of response information and output of the response information are controlled by a control portion (1).

## Description

### <Technical Field>

The present invention relates to an electronic apparatus which makes a response based on image information, an electronic apparatus which can imitate a virtual character while making a response based on image information, and a response information output method in an electronic apparatus.

### <Background Art>

As an electronic apparatus for making communications with virtual characters, ones disclosed in Patent Document 1 and Patent Document 2 have been proposed.

A virtual pet device disclosed in Patent Document 1 is to make a suitable response to an external stimulus such as a voice, an image or the like. The virtual pet device analyzes the external stimulus, identifies apersonwho input the stimulus, and makes a response in accordance with the identified person and the degree of recognition thereof. On the other hand, a user recognition degree growth system disclosed in Patent Document 2 is applicable to robot apparatus such as toy robots, game robots, household robots, industrial robots, etc., and various interactive machines such as navigation machines, vending machines, automatic reception systems, etc. The user recognition degree growth system compares recognized user information with stored user information, calculates a degree of user recognition, and corrects a selectedbehavior or a method for selecting the behavior in accordance with the calculated degree of user recognition.

That is, in each of the electronic apparatus disclosed in Patent Document 1 and Patent Document 2, a response is made in accordance with whether a person having input a voice or an image from the outside is a registered person or not, and in accordance with the degree of recognition (degree of familiarity) when the person is a registered person. Accordingly, others than registered persons cannot have communication with the virtual character. Even if they can have communication, the communication will be limited to simple one. Thus, the owner of the electronic apparatus cannot sufficiently enjoy using it together with his/her friends. In addition, the response is not made directly to the input voice or image. Therefore, the response is apt to be standardized.
(Patent Document 1) International Publication No. 00/53281 pamphlet
(Patent Document 2) Japanese Patent Laid-Open No. 2001-51970

The present invention was developed in consideration of the foregoing circumstances. It is an object of the present invention to provide an electronic apparatus which can imitate a virtual character and in which others than a user can have communication with the virtual character so that the user can enjoy using the electronic apparatus together with the others, and a response information output method. It is another object of the present invention to provide an electronic apparatus and a response information output method, which can make a wide variety of responses to an input image.

### <Disclosure of the Invention>

An electronic apparatus according to the present invention is to make a response based on image information. The electronic apparatus includes image input means for inputting image information, registered dictionary storage means for storing a registered dictionary including face image data or face feature data of a user, response information generating means for generating response information using the input image information input by the image input means and the registered dictionary, and output means for outputting based on the response information, wherein the registered dictionary includes partial region image data or feature data of each face part, and the response information generating means generates response information based on similarity between image information of each face part extracted from the input image information and the registered dictionary. According to the present invention, response information is generated in accordance with image information of each face part extracted from input image information. It is therefore possible to make a varied response to the input image.

The electronic apparatus according to the present invention further includes character imitating means for imitating a virtual character, wherein the character imitating means generates imitated response information for imitating a behavior of the character based on the response information, and the output means outputs based on the imitated response information. According to the present invention, a response imitating a virtual character is made. It is therefore possible for the user to enjoy communication with the character.

The electronic apparatus according to the present invention includes an electronic apparatus in which the response information generating means compares the registered dictionary and the input image information with each other, makes a determination as to whether the input image information indicates an image of the user or not, and generates response information varied in accordance with a result of the determination. According to the present invention, others than the user can make communication with the virtual character. It is therefore also possible for the user to enjoy using the electronic apparatus together with the others.

The electronic apparatus according to the present invention includes an electronic apparatus in which the user's face image data or face feature data included in the registered dictionary is updated based on the input image information when it is concluded that the input image information indicates an image of the user. According to the present invention, as long as the user uses the electronic apparatus, the registered dictionary is updated in consideration of the latest face image data. It is therefore possible to make amore suitable response.

The electronic apparatus according to the present invention includes an electronic apparatus in which the response information includes information about a face part low in similarity between the input image information and the partial region image data or feature data of each face part of the user when it is concluded that the input image information indicates an image of the user. According to the present invention, a response about a part different from that of the user's usual face is made to the user. It is therefore possible for the user to enjoy the response.

The electronic apparatus according to the present invention includes an electronic apparatus in which the response information includes information related to a face part high in similarity between partial region image data or feature data of each face part of the input image information and partial region image data or feature data of each face part included in the registered dictionary when it is not concluded that the input image information indicates an image of the user. According to the present invention, a response related to a person partially resembling the user or a part resembling that of the user can be made to an image input of a person other than the user. It is therefore possible for the user to enjoy using the electronic apparatus together with others. When image data or feature data of persons other than the user or those around the user are stored as a registered dictionary, it is possible for the user to enjoy the response better.

The electronic apparatus according to the present invention includes an electronic apparatus in which the registered dictionary includes image data or feature data downloaded from a data providing server through a network. According to the present invention, face images of a large number of persons including entertainers, celebrities, etc. can be stored easily as a registered dictionary.

The electronic apparatus according to the present invention includes an electronic apparatus in which the response information generating means generates the response information using information downloaded from a data providing server through a network. According to the present invention, a response information generating algorithm can be selected suitably. It is therefore possible for the user to enjoy a more varied response.

The electronic apparatus according to the present invention includes an electronic apparatus in which the response information generated using the downloaded information can be updated. According to the present invention, a response information generating algorithm can be changed periodically or in accordance with user's wish. It is therefore possible for the user to enjoy a more varied response.

The electronic apparatus according to the present invention includes an electronic apparatus in which the image input means includes image pickup means. According to the present invention, image information can be input easily. For example, when a face enters the field of view of the image pickup means such as a camera, a photographed image may be input automatically, and a response may be output in accordance with the input image information. Thus, a plurality of users can enjoy the electronic apparatus together.

The electronic apparatus according to the present invention includes an electronic apparatus in which the output means includes image display means. According to the present invention, a response can be output easily.

A response information output method according to the present invention is a response information output method in an electronic apparatus for making a response based on image information. The response information output method includes an image input step of inputting image information, a registered dictionary storage step of storing a registered dictionary including face image data or face feature data of a user, a response information generating step of generating response information using the input image information input in the image input step and the registered dictionary including face image data or face feature data of a user, and an output step of outputting based on the response information generated in the response information generating step, wherein the registered dictionary includes partial region image data or feature data of each face part, and the response information generating step generates response information based on similarity between image information of each face part extracted from the input image information and the registered dictionary.

The response information output method according to the present invention includes a response information output method in which the electronic apparatus includes character imitating means for imitating a virtual character, the response information output method further comprises an imitated response information generating step of making the character imitating means generate imitated response information for imitating a behavior of the character based on the response information generated in the response information generating step, and the output step outputs based on the imitated response information.

The response information output method according to the present invention includes a response information output method in which the response information generating step compares the registered dictionary and the input image information with each other, makes a determination as to whether the input image information indicates an image of the user or not, and generates response information varied in accordance with a result of the determination.

The response information output method according to the present invention further includes the step of updating the user's face image data or face feature data included in the registered dictionary, based on the input image information, when it is concluded that the input image information indicates an image of the user.

A program according to the present invention is a program for executing the respective steps included in the aforementioned response information output method by use of a computer.

According to the present invention, it is possible to provide an electronic apparatus and a response information output method in which persons other than the user can make communication with the virtual character so that the user can enjoy using the electronic apparatus together with the others. In addition, it is possible to provide an electronic apparatus and a response information output method, which can make varied responses to an input image.

### <Brief Description of the Drawings>

Fig. 1 is a diagram showing the schematic configuration of a camera-equipped cellular phone according to an embodiment of the present invention.
Fig. 2 is a diagram showing items of user's face information registered in a user's face information database of the camera-equipped cellular phone according to the embodiment of the present invention by way of example.
Fig. 3 is a diagram showing the configuration of a discretionary face information database of the camera-equipped cellular phone according to the embodiment of the present invention by way of example.
Fig. 4 is a diagram showing items stored in a person's attribute table of the camera-equipped cellular phone according to the embodiment of the present invention by way of example.
Fig. 5 is a schematic operation flow chart when response is made in accordance with input image information in the camera-equipped cellular phone according to the embodiment of the present invention.
Figs. 6 are views showing a display example of a display portion when response is made in accordance with input image information in the camera-equipped cellular phone according to the embodiment of the present invention.
Fig. 7 is a diagram showing an example of information stored in a response database of the camera-equipped cellular phone according to the embodiment of the present invention.

Incidentally, the reference numeral 1 in the drawings represents a control portion; 2, a ROM; 3, aRAM; 4, anon-volatile memory; 5, an image pickup portion; 6, a display portion; 7, an operation portion; 10, an internal bus; 20, a communication portion; 21, an antenna; 30, a voice processing portion; 31, a microphone; 32, a speaker; and 100, a camera-equipped cellular phone.

### <Best Mode for Carrying Out the Invention>

An embodiment of the present invention will be described below with reference to the drawings. In this embodiment, an applicable electronic apparatus is a camera-equipped cellular phone. However, the applicable subject is not limited to the camera-equipped cellular phone.

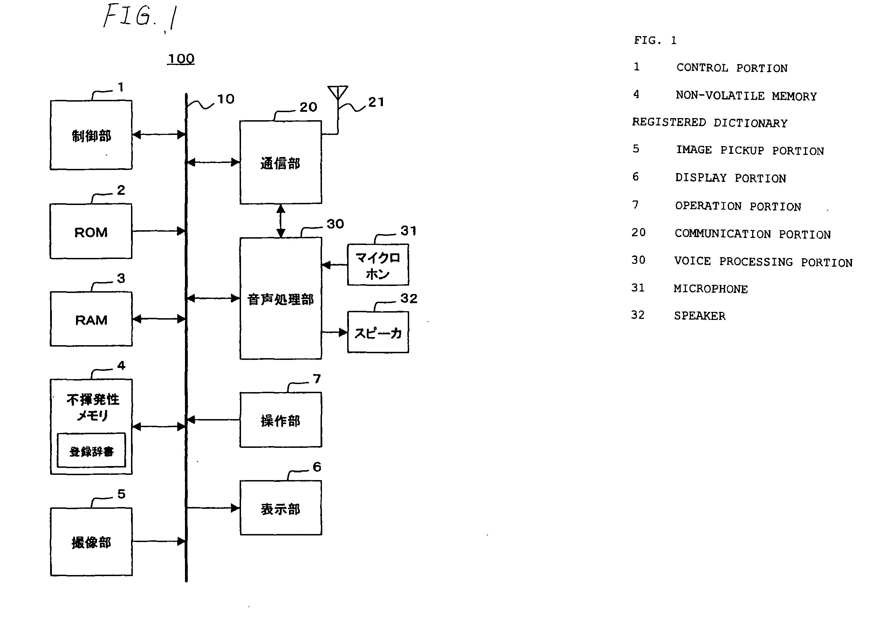

Fig. 1 is a diagram showing the schematic configuration of a camera-equipped cellular phone which is an electronic apparatus according to the embodiment of the present invention. A camera-equipped cellular phone 100 in Fig. 1 includes a control portion 1, a ROM 2, a RAM 3, a non-volatile memory 4, an image pickup portion 5, a display portion 6, an operation portion 7, an internal bus 10, a communication portion 20, an antenna 21, a voice processing portion 30, a microphone 31 and a speaker 32.

The control portion 1 controls the operation of the cellular phone 100 as a whole. The control portion 1 is chiefly constituted by a processor (not shown) for executing a predetermined program. The control portion 1 controls mutual transfer of data or commands among respective components of the cellular phone 100 through the internal bus 10. In addition, the control portion 1 has a function of generating response information using input image information and the aforementioned dictionary image data stored in the non-volatile memory 4, as will be described later. Further, the control portion 1 has a function of imitating a virtual character. When an image imitating a behavior of the character is output, the image is output through the display portion 6. When a voice imitating a behavior of the character is output, the voice is output through the voice processing portion 30 and the speaker 32.

The ROM 2 stores programs to be executed by the processor constituting the control portion 1 or various kinds of data to be used in the cellular phone 100. The RAM 3 is a memory for storing data temporarily. The RAM 3 is also used as a work memory when various processes are executed by the control portion 1. The non-volatile memory 4 is, for example, comprised of an EEPROM. The non-volatile memory 4 stores a registered dictionary and response information templates which will be described later, while serving as various data files when the user uses the camera-equipped cellular phone 100.

The image pickup portion 5 includes an optical system of lenses etc., image pickup devices, an image processing portion (not shown either), etc. The image pickup portion 5 outputs digital image data based on a photographed image signal. The image pickup portion 5 is similar to that which has been provided inarelated-artcamera-equippedcellularphone. Theoperation of the image pickup portion 5 in a normal photographing mode is also similar to that in the related-art camera-equipped cellular phone. That is, a through image in the photographing mode is displayed on the display portion 6. When a shutter button of the operation portion 7 is operated, digital image data based on a photographed image signal at that time is temporarily held in the RAM 3. When an instruction to save the data is given from the operation portion 7, the data are stored in the non-volatile memory 4. Incidentally, the camera-equipped cellular phone performing such a photographing operationhasbeenknownwell. Therefore, detailed description thereof will be omitted.

The image pickup portion 5 serves as image input means for inputting image information in a game mode in which response is made based on image information, as will be described later. In this mode, the user often operates the image pickup portion 5 while viewing a display screen of the display portion 6. It is therefore preferable that the lens of the image pickup portion 5 is trained to the display surface side of the display portion 6. This configuration can be attained as follows. That is, when a plurality of image pickup portions 5 are provided, one of the image pickup portions 5 is used for photographing the display surface side of the display portion 6. Alternatively, when the photographing direction of the image pickup portion 5 is made variable, the photographing direction is set on the display surface side of the display portion 6 in the game mode.

The display portion 6 displays various kinds of information of the cellular phone 100. The display portion 6 is constituted by a liquid crystal display panel for making a display thereon, and a display control circuit for driving this liquid crystal display panel (not shown either).

The operation portion 7 serves to allow the user to input commands or data for operating the cellular phone 100. The operation portion 7 includes a ten-key pad for inputting phone numbers or various data, various function keys, etc. These keys have functions varying in accordance with operation modes. The keys also have a function as a shutter button or a zoom button in the normal photographing mode and a photographed image input instruction key in the game mode as will be described later. In addition, the keys are also used for data input for making communication with a virtual character imitated by the control portion 1.

The communication portion 20 connected to the antenna 21 performs wireless communication with the outside. The communication portion 20 transmits transmission data on a carrier from the antenna 21, and decodes reception data received from the antenna 21. When the decoded data are voice data, the data are sent to the voice processing portion 30. When the decoded data are other data, the data are sent to the control portion 1, the RAM 3, the non-volatile memory 4 or the like through the internal bus 10 under the control of the control portion 1. On the other hand, the transmission data are input directly from the voice processing portion 30 or through the internal bus 10 from another component.

The voice processing portion 30 converts an audio signal input from the microphone 31, into digital data, and outputs the digital data to the communication portion 20 as transmission data. In addition, the voice processing portion 30 converts reception data (voice data) output from the communication portion 20, into an analog audio signal, and outputs the analog audio signal to the speaker 32. Further, the voice processing portion 30 can also send digital data based on an audio signal from the microphone 31, to the control portion 1 or the like through the internal bus 10, while converting digital data input through the internal bus 10, into an audio signal, and outputting the audio signal to the speaker 32.

Next, description will be made about the operation of the camera-equipped cellularphone 100 in Fig. 1. This cellular phone 100 has not only a function of making a call using voice but also a camera function using the image pickup portion 5, a data communication function using the communication portion 20, and a game function. These functions can be selectively activated by operating predetermined keys of the operation portion 7. Incidentally, the voice call function, the camera function and the data communication function are similar to those in the related art, and description thereof will be therefore omitted.

The game function includes a function of entertaining the user with response based on input image information. The response is implemented by an output imitating a behavior of a virtual character. A registered dictionary stored in the non-volatile memory 4 in advance is used for generating response information. Therefore, description will be made first about the registered dictionary.

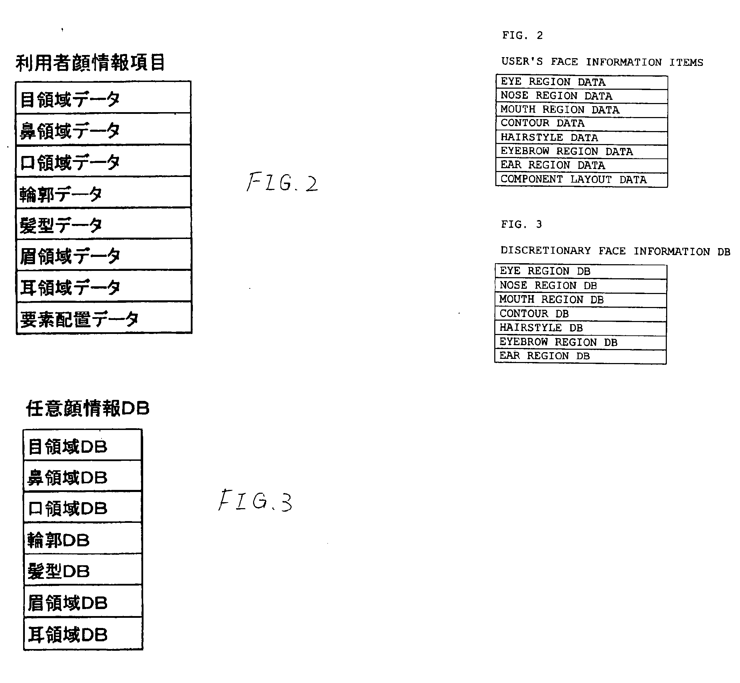

The registered dictionary includes a user's face information database and a discretionary face information database. The user' s face information database serves to store face information of the user of the cellular phone 100, including partial region image data for each part of the user's face or feature data for each part of the user's face. Fig. 2 shows items of user's face information registered in the user's face information database. Data registered in these items are generated by analysis of images of the user's face input in advance. As for items such as eyes, a nose, a mouth, ears, eyebrows, etc., vertex coordinates of those items can be used as user's face information. As for the contour, coordinates of a plurality of points on the contour line can be used as user's face information. As for the hairstyle, data in which a hair region and the other region are distinguished by binary can be used as user's face information. Further, as for component layout data, relative position data of representative components such as eyes, a nose, a mouth, etc. are registered. Incidentally, as for the items of eyes, a nose, a mouth, ears, eyebrows, etc., not their vertex coordinates but their reduced images may be used as user's face information. For example, as for an eye, an image around the eye cut out to include the eye and then reduced may be used as user's face information.

Incidentally, the user is assumed to designate one or plural persons whose face image data or face feature data have been registered as users in advance. The face image data or the face feature data are registered by inputting user's face image data photographed by the image pickup portion 5 and analyzing the input data by the control portion 1. It is preferable to use a plurality of pieces of face image data as the data to be registered. To this end, results of analysis of image data identified as the user when the game function is used may be used as will be described later. When a plurality of pieces of face image data are used, an average value of those may be used, or a distribution thereof may be registered.

The discretionary face information database stores discretionary face information. The discretionary face information includes image data or feature data for each part of a face of one person or faces of a plurality of persons. Fig. 3 shows an example of the configuration of the discretionary face information database. The person to be registered in the discretionary face information database is discretionary. For example, a face image of a user's acquaintance or a face image of a celebrity such as an entertainer may be used as the person to be registered. In addition, a face image of the user may be included. The discretionary face information database may be created using user's face image data photographed by the image pickup portion 5, or may be created using face image data downloaded from a not-shown data providing server. Alternatively, the discretionary face information database itself may be downloaded. For downloading, the cellular phone 100 is made accessible to the data providing server through a network in advance.

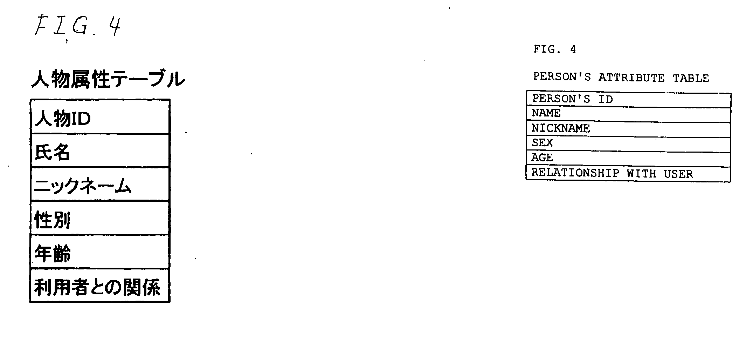

Each piece of discretionary face information to be registered in the discretionary face information database is stored in association with a corresponding person's ID so that the person indicated by an original image of the discretionary face information can be identified. In addition, a person's attribute table for storing attribute data of the person is provided in the non-volatile memory 4 so as to be associated with the person's ID. Fig. 4 shows items stored in the person's attribute table by way of example. Data of the person's attribute table can be used to generate response information based on input image information as will be described later. Incidentally, the data of the person's attribute table are stored in concert with registration of the discretionary face information database. When the face image data to be registered are downloaded from the data providing server, it is preferable to download the person's attribute data together. In addition, in the data providing server, a response database which will be described later may be stored to be associated with the person's ID. In this case, when data of the discretionary face image information database to be registered are provided, it is preferable that the response database is downloaded together.

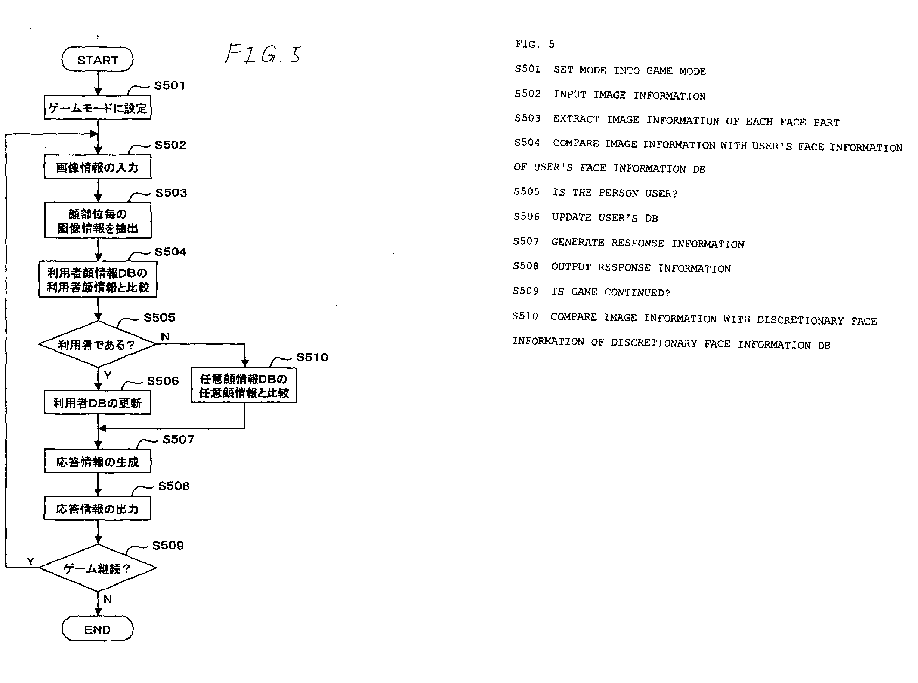

Subsequently, description will be made about the operation when response is made in accordance with input image information in the game mode. Fig. 5 is a schematic operation flow chart when response is performed in accordance with input image information. The operation in Fig. 5 is controlled by a program of the control portion 1.

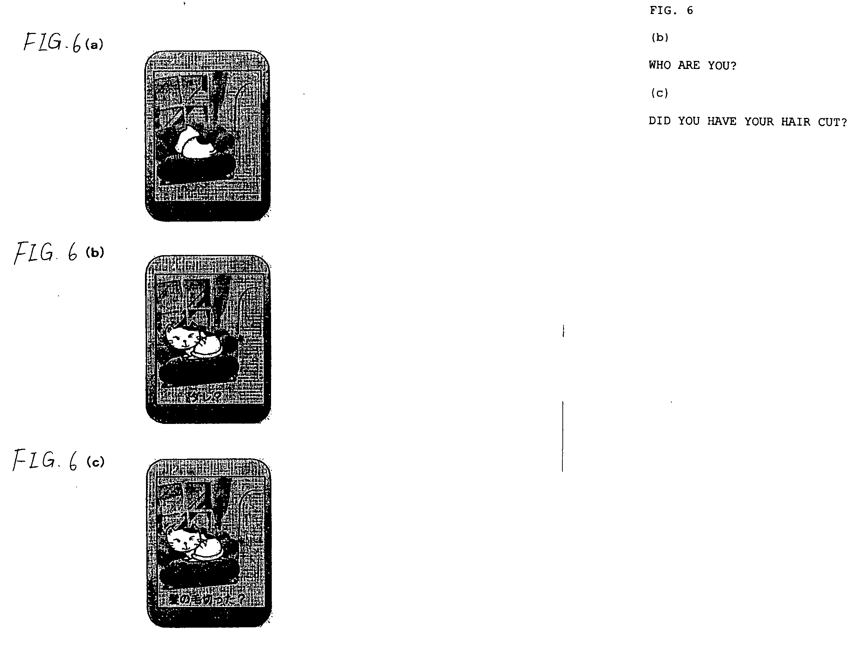

After the cellular phone 100 is set in the game mode in Step S501, a face image is photographed by use of the image pickup portion 5, and photographed image information is input (Step S502). When the control portion 1 of the cellular phone 100 has a function of imitating a virtual character, images as shown in Figs. 6(a) and 6(b) are displayed on the display portion 6 so as to prompt the user to operate. In the example of Figs. 6, the character imitated by the control portion 1 is a cat. An image of the cat sleeping or playing freely as shown in Fig. 6 (a) is displayed before the cellular phone 100 is set in the game mode. As soon as the cellular phone 100 is then set in the game mode in Step S501, the cat faces the front and asks a question as shown in Fig. 6(b). In this state, the image pickup portion 5 can photograph, while a through image from the image pickup portion 5 is displayed on the display portion 6. After that, a shutter button of the operation portion 7 is operated to allow the image pickup portion 5 to photograph. Obtained image information is input, and stored in the RAM 3.

Incidentally, the character imitated by the control portion 1 may be an imitation of an actual animate object such as a cat, an imitation of a virtual animate obj ect, or an imitation of an inanimate object such as a robot. Such a technique for displaying an image imitating a character has been known well in various game machines. Therefore, description of the technique will be omitted. Further, messages from the character may be not only displayed through written words but also output by voice. Not to say, written word data may be merely displayed to prompt an image input, without using the technique for imitating a character.

When image information is input, image information of each face part of the face is extracted from the input image information (Step S503). The extracted image information is compared with the user's face information of the user's face information database (Step S504), and it is determined whether the input image information indicates the user or not (Step S505). As the determination method, various methods can be used. For example, similarity in each face part and similarity in the layout of main components are obtained, and a score of those (weighting is defined suitably in advance) can be used.

When the input image information indicates the user, the user's face information database is updated in accordance with necessity in Step S506. This update process can be skipped, or may be performed only when the similarities are high.

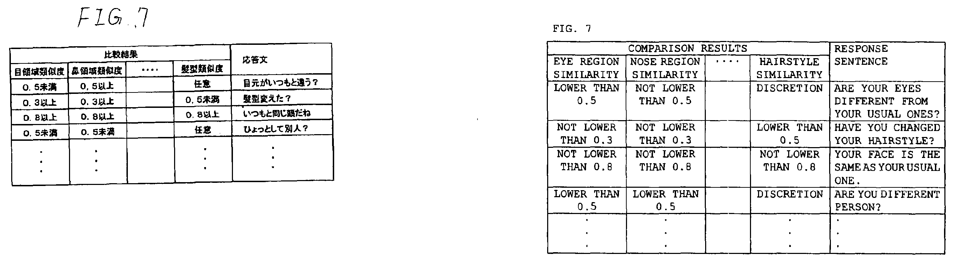

In Step S507, response information is generated. The response information here is obtained in accordance with a result of individual comparison between the image information of each face part extracted from the input image information and the user's face information of the user's face information database. The response information in accordance with the comparison result canbe generated by use of information stored in a response database as shown in Fig. 7. According to the response information stored in the response database, a difference from user's usual face is indicated when information about a face part having low similarity between the input image information and the user's face information is used. Thus, the user can be entertained by the response.

Incidentally, the response database is stored in the non-volatile memory in advance. Information downloaded from a data providing server may be used as the data to be stored in the response database. Further, when information provided by the data providing server is changed periodically, more changeful response can entertain the user.

The response information generated in Step S507 is output to the display portion 6 as image data (Step S508). Fig. 6 (c) shows an example thereof. This example is an example of response when particularly the similarity in hairstyle is low though it is concluded that the input image information indicates the user. Incidentally, as for the output of the response information based on the input image information, the response information may be output not only using an image imitating a virtual character but also together with voice information. In addition, when the cellular phone 100 does not have a function of imitating a virtual character, the response information may be displayed simply as text information on the display portion 6, or may be output to the speaker 32 in the form of voice. Further, when information about each part of a face is generated, information of photographing date or photographing location of that face may be stored. Then, response such as "Your face resembles that three months ago." may be output.

After the output of the response information, it is determined whether the game should be further continued or not (Step S509). When the game should be continued, the routine of processing returns to Step S502, in which image information is input.

When it is concluded in Step S505 that the input image information does not indicate the user, the image information of each face part extracted from the input image information is compared with the discretionary face information of the discretionary face information database (Step S510). Then, response information in accordance with the comparison result is generated in Step S507. The response information in this case is generated by selecting discretionary face information high in similarity as the comparison result and using information associated with the corresponding face part and the corresponding person.

Specifically, when discretionary face information high in similarity with an input image is extracted, attributes of a person corresponding to a person's ID corresponding to the discretionary face information are acquired with reference to a person's attribute table as shown in Fig. 4, using the person's ID. Then, response information is generated using the information about face parts and the person's attributes. For example, assume that the extracted discretionary face information is included in an eye image database, and belongs to eye image data of an entertainer A. In this case, a response sentence "Your eyes resemble A's." is generated. When similarities of a user to a plurality of pieces of user's face information are high, a response sentence such as "You resemble Mr. X (user's name) . Are you Mr. X's relative?" is generated. Templates for generating response sentences are prepared in the response database in advance. Incidentally, a dialect response database may be prepared to generate a dialect response sentence. Further, a response database imitating ways of speaking of entertainers or cartoon characters may be prepared.

Further, information of photographing date and hours as attributes of persons corresponding to discretionary face information may be held to make a response such as "Your eyes resemble entertainer A's eyes of × years ago." or "Your mouth resembles your mother's mouth of × years ago."

Although the present invention has been described in detail and with reference to its specific embodiment, it is obvious for those skilled in the art that various changes or modifications can be made on the present invention without departing from the spirit and scope thereof.

This application is based on Japanese Patent Application No. 2003-308617 filed on September 1, 2003, and the contents thereof are incorporated herein by reference.

### <Industrial Applicability>

The present invention is applicable to an electronic apparatus for making a response based on image information, an electronic apparatus capable of imitating a virtual character while making a response based on image information, and so on.

## Claims

1. An Electronic apparatus for making a response based on image information, comprising:
image input means for inputting image information;
registered dictionary storage means for storing a registered dictionary including face image data or face feature data of a user;
response information generating means for generating response information using the input image information input by the image input means and the registered dictionary; and
output means for outputting based on the response information,
wherein the registered dictionary includes partial region image data or feature data of each face part, and
wherein the response information generating means generates response information based on similarity between image information of each face part extracted from the input image information and the registered dictionary.

2. The electronic apparatus according to claim 1, further comprising:
character imitating means for imitating a virtual character,
wherein the character imitating means generates imitated response information for imitating a behavior of the character based on the response information, and
wherein the output means outputs based on the imitated response information.

3. The electronic apparatus according to claim 1 or 2,
wherein the response information generating means compares the registered dictionary and the input image information with each other, makes a determination as to whether the input image information indicates an image of the user or not, and generates response information varied in accordance with a result of the determination.

4. The electronic apparatus according to claim 3,
wherein the user's face image data or face feature data included in the registered dictionary is updated based on the input image information when it is concluded that the input image information indicates an image of the user.

5. The electronic apparatus according to claim 3 or 4,
wherein the response information includes information about a face part low in similarity between the input image information and the partial region image data or feature data of each face part of the user when it is concluded that the input image information indicates an image of the user.

6. The electronic apparatus according to any one of claims 3 to 5,
wherein the response information includes information related to a face part high in similarity between partial region image data or feature data of each face part of the input image information and partial region image data or feature data of each face part included in the registered dictionary when it is not concluded that the input image information indicates an image of the user.

7. The electronic apparatus according to any one of claims 1 to 6,
wherein the registered dictionary includes image data or feature data downloaded from a data providing server through a network.

8. The electronic apparatus according to any one of claims 1 to 7,
wherein the response information generating means generates the response information using information downloaded from a data providing server through a network.

9. The electronic apparatus according to claim 8,
wherein the response information generated using the downloaded information can be updated.

10. The electronic apparatus according to any one of claims 1 to 9,
wherein the image input means includes image pickup means.

11. The electronic apparatus according to any one of claims 1 to 10,
wherein the output means includes image display means.

12. A response information output method in an electronic apparatus for making a response based on image information, comprising:
an image input step of inputting image information;
a registered dictionary storage step of storing a registered dictionary including face image data or face feature data of a user;
a response information generating step of generating response information using the input image information input in the image input step and the registered dictionary including face image data or face feature data of a user; and
an output step of outputting based on the response information generated in the response information generating step,
wherein the registered dictionary includes partial region image data or feature data of each face part, and
wherein the response information generating step generates response information based on similarity between image information of each face part extracted from the input image information and the registered dictionary.

13. The response information output method according to claim 12,
wherein the electronic apparatus comprises character imitating means for imitating a virtual character,
wherein the response information output method further comprises an imitated response information generating step of making the character imitatingmeans generate imitated response information for imitating a behavior of the character based on the response information generated in the response information generating step, and
wherein the output step outputs based on the imitated response information.

14. The response information output method according to claim 12 or 13,
wherein the response information generating step compares the registered dictionary and the input image information with each other, makes a determination as to whether the input image information indicates an image of the user or not, and generates response information varied in accordance with a result of the determination.

15. The response information output method according to claim 14, further comprising the step of updating the user' s face image data or face feature data included in the registered dictionary, based on the input image information, when it is concluded that the input image information indicates an image of the user.

16. A program for executing the respective steps included in any one of claims 12 to 15 by use of a computer.
